# EUROPÄISCHE PATENTANMELDUNG

(11) **EP 1 484 608 A2**
(43) Veröffentlichungstag der Anmeldung: **08.12.2004**
(21) Anmeldenummer: 04012955.3
(22) Anmeldetag: 02.06.2004
(51) Int. Cl.: G01N 29/24, G01S 7/521, G10K 11/00, G10K 11/34, B06B 1/06

(54) **Schadensermittlung an zu prüfenden Strukturen mittels permanent angebrachter Ultraschallsensoren mit integrierter Steuereinheit**

(30) Priorität: 05.06.2003 DE 10325406
(71) Anmelder: EADS Deutschland GmbH, 85521 Ottobrunn (DE)
(72) Erfinder: Kress, Klaus-Peter, 85649 Brunnthal (DE); Wolf, Paul, 85551 Kirchheim (DE)

(57) **Zusammenfassung**

Die Erfindung betrifft eine zerstörungsfreie Ultraschall-Prüfeinrichtung zum Detektieren und Visualisieren von Schäden an und in Strukturteilen durch Reflektionen eingeleiteter Ultraschallwellen an Inhomogenitäten im Prüfbereich, bestehend
- aus vorwiegend Piezo- Sensoren, die je nach Ansteuerung als Sender oder als Empfänger von Ultra-Schallwellen fungieren können, und die permanent an den zu prüfenden und/oder zu überwachenden Strukturteilen in deren schadenskritischen Bereichen beispielsweise durch Kleben befestigt sind, sowie
- aus einer Steuereinrichtung, die über elektrische Leitungsdrähte mit dem jeweiligen Sensor verbunden ist, so dass die empfangenen reflektierten Ultraschallwellen als bildgebende Daten in einer entsprechenden Einrichtung (Auswerteeinheit) genutzt werden können, um abschließend mit zu erwartenden Ultraschall-Bildern zur Ermittlung eines eventuell entstandenen Schadens verglichen zu werden.

Das Wesen der Erfindung besteht darin, dass die Steuereinheit - beispielsweise eine digitale FPGA (Field Programmable Gate Array) - nahezu abstandsfrei mit dem ihr zugeordneten Sensor verbunden ist.

Ein weiterer wesentlicher Erfindungsgedanke ist darin zu sehen, dass die Sensoren zwei- oder mehrdimensional ausgebildet sind, derart, dass sie bei Bedarf auch eindimensional einsetzbar sind.

## Beschreibung

Die Erfindung betrifft die Schadenserkennung bis hin zur konkreten Schadensermittlung an Strukturen, im besonderen an und in deren schadenskritischen Teilen und/oder Bereichen mittels zerstörungsfreier Prüfung unter Einsatz von Ultraschall und entsprechenden Sensoren, vorwiegend mit Piezo-Sensoren gemäß Oberbegriff von Patentanspruch 1.

Einschlägige Prüfeinrichtungen und Verfahren dieser Art sind hinreichend bekannt. Sie sind jedoch in der Regel mit überdurchschnittlich großem Aufwand an Kosten und Zeit verbunden, was ihren Einsatz oft bis zur Unwirtschaftlichkeit steigert. Der Hauptgrund hierfür ist die zumeist erschwerte Zugänglichkeit der Sensorik zu den kritischen Bereichen einer Struktur - man denke in diesem Zusammenhang beispielsweise nur an den Flugzeugbau - , die gegebenenfalls zur Überprüfung in dem vorliegenden Zusammenhang ganz oder teilweise zerlegt und demontiert werden muss, um die erforderlichen Prüfungen durchführen zu können. Auf diese Weise kann eine Prüfung, die selbst vielleicht nur einige Minuten in Anspruch nimmt, mit einer vielstündigen oder gar mehrtägigen Vor- und Nacharbeit verbunden sein. Des weiteren ist in diesem Zusammenhang erwähnenswert, dass bei der Visualisierung der Messergebnisse die Bildqualität mehr oder weniger leidet, wenn die Sensoren während der Erfassung der Messdaten nicht optimal positioniert werden können, und wenn außerdem die Sensoren als solche nicht höchsten Qualitätsansprüchen genügen.

Aus den vorgenannten Gründen wurde bereits vorgeschlagen, die Sensoren an den zu prüfenden bzw. zu überwachenden Stellen oder Bereichen einer Struktur fest mit dieser- beispielsweise durch Kleben - zu verbinden und mit entsprechenden elektrischen Leitungen zu versehen, die eine Verbindung mit der Steuereinheit der Sensoren sowie mit der Auswerteeinheit der Messergebnisse in der Prüfeinrichtung ermöglichen. Eine derartige Lösung ist beispielsweise aus dem Dokument "Smart Wide-Area Imaging Sensor System (SWISS)" , PROC.SPIE, USA, Band 4332, Seiten 490-496 seit dem 08. März 2001 bekannt. Dieses Dokument offenbart eine zerstörungsfreie Ultraschall-Prüfmethode zur Detektion von Schäden in einem Prüfbereich von Strukturteilen anhand von Reflexionen an Inhomogenitäten im Prüfbereich, wobei mehrere Piezo-Ultraschallsensoren verwendet werden. Diese Sensoren sind permanent an einem Strukturteil in dessen kritischen Bereichen installiert, wodurch Prüfpunkte im jeweiligen Prüfbereich festgelegt werden. Aus den Ergebnissen der Messungen werden Ultraschallbilder erstellt.

Es ist weiterhin bekannt, die mit den Sensoren gemessenen Signale zu speichern und mit zu erwartenden Werten zu vergleichen, um herauszufinden, ob ein Schaden vorliegt und in welcher Art sowie in welchem Umfang er eingetreten ist.

Der Erfindung liegt die Aufgabe zugrunde, das gesamte Prüfkonzept der eingangs genannten Art qualitativ und auch quantitativ zu verbessern.

Bislang wurden und werden als Ultraschallsensoren in den meisten Fällen Piezoelemente in Form von eindimensionalen Arrays (Zeilen auf Datenfeldern) verwendet. Wenn ein derartiger Sensor beispielsweise 16 Zeilen besitzt, dann muss er entsprechend über 16 individuell voneinander getrennte Leitungen mit seiner Steuer- bzw. Auswerteeinheit verbunden werden. Dies ist ein umständliches und vor allem sehr aufwendiges Unterfangen wenn man bedenkt, dass beispielsweise zur Vermessung respektive Überprüfung eines Hochleistungsflugzeuges 50 bis 100 Sensoren im Einsatz sind. Nachteiligerweise resultiert daraus bereits ein immenser Verdrahtungsaufwand bei vergleichsweise nur mittelmäßigem Wirkungsgrad der vorstehend näher bezeichneten Sensoren mit nur eindimensionalen Arrays.

Zur Verbesserung der Wirkungsgrade der Sensoren müsste man diese in Form von zwei- oder gar mehrdimensionalen Arrays zum Einsatz bringen, was technisch grundsätzlich machbar ist, was jedoch den Verdrahtungsaufwand gegenüber dem eindimensionalen Array quadratisch hochschnellen ließe, nämlich von 16 auf 256 individuelle Anschlussleitungen pro Sensor.

Der Erfindung liegt damit im wesentlichen die konkrete Aufgabe zugrunde, bei einer Prüfeinrichtung der eingangs genannten Art den Einsatz bzw. die Verwendung von ein-, zwei- oder eventuell auch mehrdimensionalen Sensor-Arrays unter Vermeidung des vorerwähnten Verdrahtungsaufwandes zu ermöglichen.

Gelöst ist diese Aufgabe grundsätzlich dadurch, dass vor allem die zwei- oder mehrdimensionalen Sensor-Arrays nahezu abstandsfrei mit ihrer grundsätzlich digitalen Steuereinheit, beispielsweise mit einem digitalen FPGA ( Field Programmable Gate Array) verbunden sind. Die Ankopplung kann mittels aufgesetzter sogenannter Lötzinn-Balls erfolgen. Alternativ wäre es beispielsweise auch möglich, die Ankopplung im Rahmen der Erfindung kapazitiv über sogenannte Pads auf einer Leiterplatte zu realisieren. Eine mechanische Nachbearbeitung und Kontaktierung wäre in diesem Falle nicht mehr erforderlich. Für den Fall, dass die Piezoelemente durch thermische Ultraschallwandler (Dioden) ersetzt würden, entfällt die Notwendigkeit einer Kontaktierung.

Im Rahmen der Erfindung werden damit die Sensoren mit ihren erfindungsgemäß angekoppelten Steuereinheiten in den schadenskritischen Bereichen einer zu prüfenden bzw. zu überwachenden Struktur permanent beispielsweise durch Kleben befestigt. Dadurch wird die Sensorik gegenüber bekannten Prüfsystemen zwar etwas schwerer; diese Gewichtszunahme wird jedoch mehrfach kompensiert durch die erfindungsgemäß nicht mehr erforderliche aufwendige Verdrahtung zwischen den Sensoren und ihren Steuereinheiten.

Des weiteren erlaubt die durch die Erfindung qualifiziertere Sensorausbildung entsprechend genauere und zuverlässigere Messergebnisse, die es ermöglichen, bei der Bemessung der betreffenden Konstruktionsteile noch näher an das kritische Limit heranzugehen, so dass auch hierdurch die Gesamtstruktur gewichtsmäßig noch weiter reduziert werden kann.

Im Ultraschallbereich kann das erfindungsgemäße Prüfkonzept durch die Anwendung des an sich bekannten Phased-Array - Verfahrens noch effizienter ausgestaltet werden für das Erfassen und Visualisieren der inneren Beschaffenheit einer Materialstruktur. Es lassen sich Materialveränderungen beispielsweise durch Ermüdung oder Belastung über die Elastizitätsgrenze hinaus, durch Korrosion an der Oberfläche oder in Bohrungen etc. oder durch Materialeinschlüsse wie Fremdkörper, die eine inhomogene Materialdichte bewirken, zuverlässig identifizieren und/oder überwachen.

Im Ultraschallbereich wird das Phased-Array - Verfahren noch nicht in der kostengünstigen erfindungsgemäßen Version eingesetzt. Bei den bekannten einschlägigen Verfahren muss mit Spannungen von ca. 100 Volt und mehr gearbeitet werden; demgegenüber werden bei dem erfindungsgemäßen Prüfsystem nur Spannungen von maximal plus-minus 5 Volt benötigt.

Der Hauptvorteil der erfindungsgemäßen Prüfeinrichtung liegt in der Miniaturisierung der gesamten Sensorik, bestehend aus einem vielelementigen, vorwiegend Piezo-Ultraschall -Sensor und einer Steuereinheit, beispielsweise dem digitalen FPGA. Die erfindungsgemäße Sensorik wird nachfolgend vereinfacht MiniSWISS-Sensor genannt (SWISS = Smart Wide Area Imaging Sensor System).

Die Basis des Mini-SWISS-Sensors bildet ein ultraschallgebender und ultraschallempfangender Piezo-Sensor, welcher in Funktion der Befehle der mit dem PiezoElement gekoppelten Steuereinheit sowohl als Sender wie auch als Empfänger des Ultraschalls arbeiten kann. Die jeweils empfangenen Signale werden über einen AD/C (Analog Digital Converter) zur Steuereinheit zurückgeführt. Bei letzterer kann es sich um ein "Field Programmable Gate Array" (FPGA) handeln. Die Ansteuerung der Senderelemente der erfindungsgemäßen Sensorik erfolgt direkt über die TTL-Ausgänge (Transistor Transistor Logik) der Steuereinheit FPGA. Die Zeitbasis des erfindungsgemäßen Systems kann durch einen Quarzoszillator gebildet werden. Auf der Basis des Quarzoszillators werden die erforderlichen Verzögerungen für die Ansteuerungen der Aus- und Eingänge bestimmt. Er liefert gleichzeitig das Referenzsignal beim Aufbau von kaskadierten Systemen. Die Ansteuerung des AD/C wird vom FPGA übernommen. Die Hard- und Software-Programmierung des FPGA erfolgt über eine serielle Schnittstelle. Eine weitere bidirektionale Schnittstelle dient zum direkten Datenaustausch zwischen einem PC (Personal Computer), einem Micro Controller etc. und dem FPGA. Die serielle Schnittstelle kann durch diverse bekannte Elemente wie zum Beispiel durch eine RS232, eine RS 424, durch Ethernet, CAN-Bus etc. realisiert werden. Die empfangenen Rohdaten werden im FPGA mit mathematischen Algorithmen gefiltert und zur weiteren Bearbeitung für die Visualisierung der empfangenen Signale aufbereitet. Die erfassten Geometriedaten der Schadensermittlung können dann im PC zur Visualisierung auf dem Monitor bereitgestellt werden. Je nach Anwendung kann die Darstellung in 3D-, 2D- oder in alphanumerischer Weise erfolgen.

Das erfindungsgemäße Prüf- und Überwachungs- System findet in der gesamten Technik ein breites Anwendungsfeld. Es können Flächen von Blechen und Körpern auch über größere Strecken gescannt werden, indem die Körper selbst als Übertragungsmedium dienen. Auch Vibrationen jeglicher Art wie Longitudinal- und Transversalwellen oder akustische Emissionen, Längenausdehnungen, Materialveränderungen, Strukturveränderungen mit und ohne Referenzbild, Korrosionen jeglicher Art sowie auch Materialeinschlüsse in Form von Fremdkörpern, die gegebenenfalls in dem zu prüfenden Objekt unterschiedliche Materialdichten bewirken.

Das erfindungsgemäße Prüfsystem resultiert aus dem Flugzeugbau. In seiner Anwendung ist es aber bei weitem nicht auf dieses Gebiet beschränkt. Es kann im weitesten Sinne im Fahrzeugbau, im Waggonbau, im Schiffsbau sowie im Maschinenbau schlechthin zur Anwendung kommen. Im Maschinenbau können zu prüfende und zu überwachende Probleme folgender Art auftreten: Struktur- und Materialtests, Materialveränderungen, Materialer-müdungen infolge Veränderungen der internen Materialstruktur, Korrosionsbildungen jeglicher Art, Rissbildungen, Längenveränderungen durch Dehnen und Stauchen, Verformungen, nachteilige Schwingungen etc..

Ein sehr wichtiges Anwendungsfeld kann sich für das erfindungsgemäße Prüfsystem für die Kernkraftwerke ergeben. Hier könnte die Erfindung beispielsweise auch als Online-Fernüberwachung eine bahnbrechende Rolle spielen.

Auch Windkraftanlagen und die Bautechnik im allgemeinen dürften eine Vielzahl von Anwendungsmöglichkeiten für die vorliegende Erfindung bieten. Während bei Windkraft-Anlagen das Gehäuse und die Lagerbeanspruchungen besonders überwacht werden müssen, bietet das Bauwesen Einsatzmöglichkeiten für die Erfindung hinsichtlich der Prüfung und Überwachung der Konsistenz der Baumaterialien, der Verifizierung der Armierung bei Brücken, im besonderen bei deren Aufhängung und Lagerung. Weitere Prüf- und Überwachungsobjekte bieten Bauteile aus Beton, aus Eisen und aus Holz. Nicht zuletzt kann die Erfindung behilflich sein bei der Verifizierung der Leitungsführung in Sachen Elektro, Wasser und Heizung inklusive Fußbodenheizung.

Des weiteren ist das erfindungsgemäße System auch bestens geeignet für den mobilen Einsatz. Die typischerweise erforderliche Systemspannung von ca.5 Volt kann über entsprechend geeignete Akkus bereitgestellt werden. Eine Gefährdung für Menschen, die das System bedienen ist daher auszuschließen.

Abschließend sei hinsichtlich der vielen Anwendungsmöglichkeiten der vorliegenden Erfindung auf das wichtige Gebiet der Medizintechnik verwiesen. Das erfindungsgemäße Prüfsystem könnte sich hier beispielsweise sogar nützlich machen als Röntgenersatz.

Auch bei der Online-Beobachtung wären Anwendungsfälle im Rahmen der Medizintechnik denkbar. Alle hier möglichen Anwendungsfälle schließen neben dem Menschen auch das Tier ein.

Die zahlreichen Vorteile der erfindungsgemäßen Prüf- und Überwachungseinrichtung bieten zweifellos viele weitere Anwendungsmöglichkeiten auf diversen Gebieten der Technik.

An Vorteilen des erfindungsgemäßen Systems ist vor allem zu nennen:
- die extrem niedrige Ansteuerungsspannung, die gegenüber gebräuchlichen Systemen um mindestens das zwanzigfache reduziert werden konnte;
- die Eingangsdaten werden in der Steuereinheit durch mathematische Allgorithmen aufbereitet;
   - der Sensor ist in Zeilen und Spalten unterteilt, wodurch mittels Phasenansteuerung die Scan-Richtung um 90° gedreht werden kann;
   - durch die Ausbildung des Sensors mit Zeilen und Spalten als zweidimensionales Array wird beim Übergang von der Zeilen- zur Spaltenaktivierung sogar ein sogenannter Rundumblick im zu prüfenden Objekt ermöglicht; statt Zeilen und/oder Spalten können auch beliebige Gruppenunterteilungen oder Bereiche des Arrays aktiviert werden;
   - direkte Ankopplung der Steuereinheit (FPGA) an das zwei- oder mehrdimensionale Sensor-Array, vorteilhaft mittels Balls über eine zweiseitige Platine. Bei kapazitiver Ankopplung kann das Dielektikum durch den Kleber oder durch eine Isolierschicht realisiert werden;
   - Das Leiterplatten-Layout bildet die Grenze der geometrischen Auflösung. Somit wird eine minimale Verkabelung erforderlich. Daraus folgt eine direkte Ansteuerung des Sensors, des weiteren kurze Laufzeiten, eine hohe zeitliche Auflösung, hohe elektrische Störsicherheit, geringe Störstrahlung und geringe Störempfindlichkeit.
   - Man kann die erstgenannte Einrichtung auch als Phased Array im konventionellen Sinn betreiben.
   - Durch Umprogrammieren kann das System an die jeweilige Anwendung angepasst werden.
   - Durch Kaskadierung von Mini-SWISS-Sensoren kann die Apertur erweitert werden. Die Laufzeitunterschiede können im FPGA kompensiert werden, womit für die Bildgenerierung und die Geometriebestimmung eine einheitliche Zeitbasis gegeben ist.
   - Das erfindungsgemäße Mini-SWISS-System bietet eine geringe Ausfallwahrscheinlichkeit in der Bewertung des zu prüfenden Objekts. Objekte, die durch Belastung über ihre Elastizitätsgrenze hinaus beansprucht werden, zeigen Ermüdungserscheinungen in ihrer internen Materialstruktur. Derartige Veränderungen können numerisch mit Hilfe des Ultraschalls erfasst und somit ausgewertet werden. Ein beispielsweise über die Zeit erstelltes Alterungsprofil erlaubt eine Aussage über den momentanen Zustand des Objekts im allgemeinen an der betrachteten Stelle.

Die Unteransprüche enthalten besondere Ausgestaltungen der Erfindung gemäß dem Patentanspruch 1.

In den Abbildungen ist die Erfindung zeichnerisch erläutert. Es zeigen:
- Abb. 1a: einen erfindungsgemäßen Mini-SWISS-Sensor in schematischer Darstellung.
- Abb. 1b: eine Sensormatrix gemäß Abb. 1 a in zweidimensionaler Ausführung.
- Abb. 2: eine Kombination von Mini-SWISS- Sensoren in Modulbauweise (sechsfach) als ein Fertigungsvorschlag.
- Abb. 3: gruppierte Elemente eines Mini-SWISS-Sensors, welche zusammen ein kontrolliert drehbares konventionelles Array approximieren.

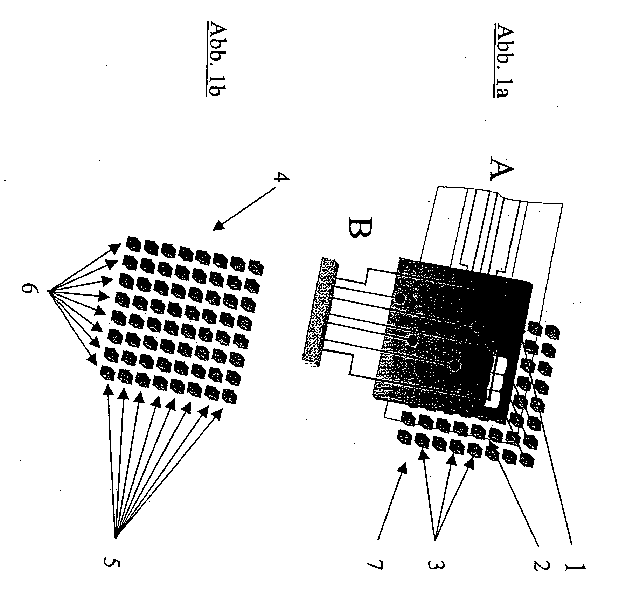

Gemäß Abb.1a ist erfindungsgemäß eine Mikroelektronik 1 (Steuereinheit in Form z.B. einer FPGA, Hybrid,etc.) über einen Kopplungslayer 2 mit einer aus Sensorelementen 3 bestehenden Sensormatrix 4 möglichst abstandsfrei verbunden. Die Sensorelemente 3 bestehen in dem gezeigten Beispiel aus piezoelektrischem Material.

Die Abb.1b zeigt in gesonderter Darstellung die Sensormatrix 4 gemäß der Abb.1a. Die Sensormatrix 4 besteht in dem gezeigten Beispiel aus acht Zeilen 5 und aus ebenso vielen Spalten 6. Die Sensormatrix 4 ist damit in diesem Falle aus insgesamt vierundsechzig Sensorelementen 3 zusammengesetzt. Durch die möglichst abstandsfreie Verbindung (Kopplung) zwischen der Mikroelektronik(Steuereinheit) 1 und der Sensormatrix 4 werden durch die Erfindung gegenüber herkömmlichen Bauweisen mit außerhalb der zu prüfenden Strukturen angeordneten Steuereinheiten vierundsechzig mehr oder weniger lange Leitungsdrähte pro Sensormatrix eingespart.

Das Mini-SWISS-Sensor-Modul 7 gemäß Abb.1a, bestehend im wesentlichen aus den Teilen 1 bis 3, weist durch die Erfindung lediglich noch Steuer-, Betriebs- und Versorgungsleitungen entsprechend A bzw. B auf. Für deren Anschlüsse gibt es diverse Möglichkeiten. Zwei davon sind gemäß den zeichnerischen Darstellungen A und B in Fig.1 alternativ angedeutet. Während die Leitungen gemäß Vorschlag A zwischen der Sensormatrix 4 und der Mikroelektronik 1 angeschlossen sind, befinden sich die Anschlüsse der Leitungen gemäß B an der Außenfläche der Mikroelektronik 1. Im Falle der Realisierung des Vorschlages A kann der Vorschlag B entfallen und umgekehrt.

Sofern sich diese Leitungen im Rahmen der erfindungsgemäßen Ultraschall-Prüfeinrichtung störend auswirken sollten, können sie im Rahmen der Erfindung auch durch Funk-Fernsteuerungen vollends oder zumindest teilweise bis größtenteils ersetzt werden, je nach den individuellen Gegebenheiten.

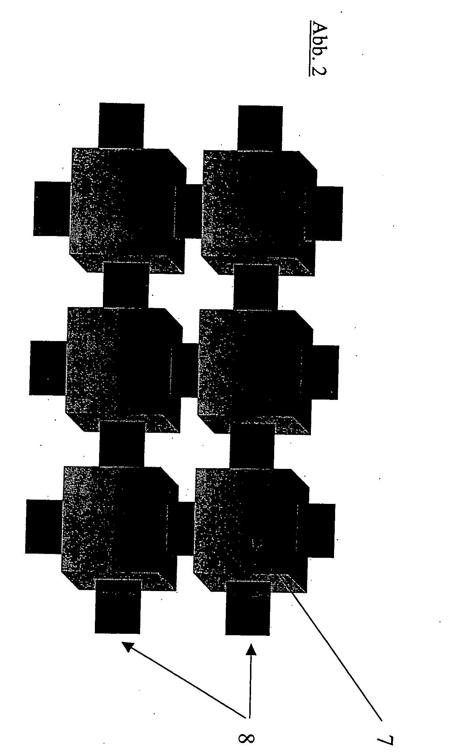

Wie aus der Abb.2 hervorgeht, können die erfindungsgemäßen Mini-SWISS-Sensor-Module 7 in Matrixform kombiniert gefertigt werden unter Nutzung einer gemeinsamen Kopplung 8, beispielsweise in Form eines Kopplungslayers, eines flexiblen Polyimids oder eines Kupferbahnträgers.

Die anwenderspezifische Konfektionierung kann dann jeweils durch Heraustrennen einer geeigneten Gruppe von Mini-SWISS- Sensor-Modulen 7 erfolgen.

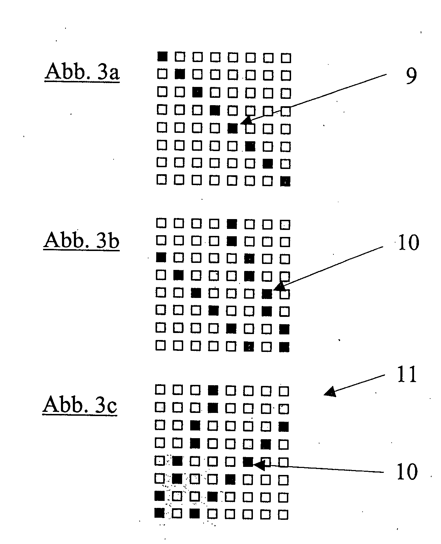

Die Abbildungen 3a bis 3c zeigen drei Möglichkeiten 9, 10 und 11 einer programmgesteuerten Auswahl von Sensorelementen 3 gemäß Abb.1, die jeweils betrieben werden für eine anwendungsspezifische Applikation.

Die Abbildungen 3b und 3c zeigen darüber hinaus, wie die hier ausgewählte Matrix 10 gemäß Abb.3b um 90° nach rechts in die Einstellung 11 gedreht werden kann.

## Patentansprüche

1. Zerstörungsfreie Ultraschall-Prüfeinrichtung zum Detektieren und Visualisieren von Schäden an und in Strukturteilen durch Reflektionen eingeleiteter Ultraschallwellen an Inhomogenitäten im Prüfbereich, bestehend
- aus Sensoren, vorwiegend aus Piezo-Sensoren, die je nach Ansteuerung als Sender oder als Empfänger von Ultra- Schallwellen fungieren können, und die permanent an den zu prüfenden und/oder zu überwachenden Strukturteilen in deren schadenskritischen Bereichen beispielsweise durch Kleben befestigt sind, sowie
- aus einer Steuereinrichtung, die über elektrische Leitungsdrähte mit dem jeweiligen Sensor verbunden ist, so dass die empfangenen reflektierten Ultraschallwellen als bildgebende Daten in einer entsprechenden Einrichtung (Auswerteeinheit) genutzt werden können, um abschließend mit zu erwartenden Ultraschall-Bildern zur Ermittlung eines eventuell entstandenen Schadens verglichen zu werden,
**dadurch gekennzeichnet, dass** die Steuereinheit (1) - beispielsweise eine digitale FPGA (Field Programmable Gate Array) - nahezu abstandsfrei mit dem ihr zugeordneten Sensor (4) verbunden ist.

2. Zerstörungsfreie Ultraschall-Prüfeinrichtung nach Anspruch 1, **dadurch gekennzeichnet, dass** die Verbindung zwischen Sensor (4) und Steuereinheit (1) durch Kleben mittels kapazitiver Kopplung über sogenannte Pads auf einer Leiterplatte oder mit einem flexiblen Multilayer (2) realisiert ist.

3. Zerstörungsfreie Ultraschall-Prüfeinrichtung nach Anspruch 1, **dadurch gekennzeichnet, dass** die Verbindung zwischen Sensor (4) und Steuereinheit (1) durch eine Lötverbindung über sogenannte Lötzinn-Balls auf den Pads einer Leiterplatte oder einen flexiblen Multilayer realisiert ist.

4. Zerstörungsfreie Ultraschall-Prüfeinrichtung nach Anspruch 1, **dadurch gekennzeichnet, dass** die Verbindung zwischen Sensor (4) und Steuereinheit (1) optisch durch Sende-und Empfangsdioden realisiert ist.

5. Zerstörungsfreie Ultraschall-Prüfeinrichtung nach Anspruch 1, **dadurch gekennzeichnet, dass** die Verbindung zwischen Sensor (4) und Steuereinheit (1) elektromagnetisch auf einer Leiterplatte realisiert ist.

6. Zerstörungsfreie Ultraschall-Prüfeinrichtung nach den Ansprüchen 4 und 5, **dadurch gekennzeichnet, dass** die Sensoren (4) aus Piezokeramiken oder aus magnetostriktiven bzw. elektrostriktiven Legierungen gebildet sind.

7. Zerstörungsfreie Ultraschall-Prüfeinrichtung nach einem oder mehreren der Ansprüche 1 bis 6, **dadurch gekennzeichnet, dass** die Sensoren bzw. die Sensormatrix (4) zwei- oder mehrdimensional ausgebildet sind, derart, dass sie kontrolliert auch eindimensional einsatzfähig sind.

8. Zerstörungsfreie Ultraschall- Prüfeinrichtung nach einem oder mehreren der Ansprüche 1 bis 7, **gekennzeichnet durch** eine Einrichtung zur Konditionierung, z.B. zur Impedanz-Konditionierung der Empfangswellen vor ihrer A/D-Wandlung.

9. Zerstörungsfreie Ultraschall-Prüfeinrichtung nach einem oder mehreren der Ansprüche 1 bis 8, **gekennzeichnet durch** eine Einrichtung zur Selbstüberwachung per Selbsttest, z.B. hinsichtlich der Funktionalitätsprüfung, der Kalibrierung, der Prüfung auf Degradierung des Sensormaterials, der Klebung und der Kontaktierung.

10. Zerstörungsfreie Ultraschall-Prüfeinrichtung nach einem oder mehreren der Ansprüche 1 bis 9, **dadurch gekennzeichnet, dass** die Positioniergenauigkeit des Mini-SWISS-Sensors durch einen hochpräzisen Positionsgeber, beispielsweise durch einen integralen 3D-Beschleunigungsmesser, der in der Steuereinheit (1) zusätzlich implementiert ist, realisiert ist.

11. Zerstörungsfreie Ultraschall-Prüfeinrichtung nach einem oder mehreren der Ansprüche 1 bis 10, **dadurch gekennzeichnet, dass** mehrere Sensor/Struktureinheiten über ein Netzwerk miteinander verbunden sind, wodurch Generierung und Empfang des Ultraschalls kohärent in Echtzeit bzw. in synthetischer Simulation erfolgen kann oder auch fertigungstechnische Vorteile erzielt werden können.

12. Zerstörungsfreie Ultraschall-Prüfeinrichtung nach Anspruch 11, **dadurch gekennzeichnet, dass** die Kohärenz unterschiedlich realisierbar ist, beispielsweise durch individuelle Zeitbasis je Sensor/Steuereinheit oder durch teilweise synchronisierte Netze.

13. Zerstörungsfreie Ultraschall-Prüfeinrichtung nach einem oder mehreren der Ansprüche 1 bis 12, **dadurch gekennzeichnet, dass** die Sende- und Empfangssequenzen kontrolliert synchronisierbar sind, z.B. durch externe Signale wie beispielsweise bei stroboskopischen Verfahren.

14. Zerstörungsfreie Ultraschall-Prüfeinrichtung nach einem oder mehreren der Ansprüche 1 bis 13, **dadurch gekennzeichnet, dass** eine Überlagerung der Messergebnisse auch inkohärent realisierbar ist, das heißt, dass eine Summation der Amplitudenintensitäten auch ohne Berücksichtigung der Phase erfolgen kann.

15. Zerstörungsfreie Ultraschall-Prüfeinrichtung nach einem oder mehreren der Ansprüche 1 bis 14, **dadurch gekennzeichnet, dass** zusätzlich zur Basisdokumentation weitere Versuchsprotokoll-relevante Daten speicherbar sind.

16. Zerstörungsfreie Ultraschall-Prüfeinrichtung nach einem oder mehreren der Ansprüche 1 bis 15, **dadurch gekennzeichnet, dass** zur Vermeidung einer Umschaltung der Sensoren (4) zwischen Sende- und Empfangsbetrieb diese innerhalb der Prüfeinrichtung bei entsprechender Aufteilung entweder nur sensorisch oder nur aktorisch ausgebildet sind.

17. Zerstörungsfreie Ultraschall-Prüfeinrichtung nach einem oder mehreren der Ansprüche 1 bis 16, **dadurch gekennzeichnet, dass** die Sensoren (4) auch zur Übernahme konventioneller Funktionen wie z.B. Audioübertragungen (Sprachausgabe und Sprachaufnahme, Warnsignale) ausgerüstet ist.

18. Zerstörungsfreie Ultraschall-Prüfeinrichtung nach einem oder mehreren der Ansprüche 1 bis 17, **dadurch gekennzeichnet, dass** die Einrichtung zur Unterstützung von Arbeitsprozessen ausgerüstet ist, die auf eine genaue Kenntnis der Strukturbeschaffenheit angewiesen sind, wie z.B. die Chirurgie, die Lithotripsie, die Überwachung von Patienten mobil und/oder stationär, die Robotronik allgemein, die Schweisstechnik und mechanische Bearbeitungsverfahren.

19. Zerstörungsfreie Ultraschall-Prüfeinrichtung nach einem oder mehreren der Ansprüche 1 bis 18, **dadurch gekennzeichnet, dass** die Steuereinheit zur Messung Prüfungs-relevanter Parameter wie Temperatur, Feuchtigkeit, Luftdruck etc. ausgestattet ist.

20. Zerstörungsfreie Ultraschall-Prüfeinrichtung nach einem oder mehreren der Ansprüche 1 bis 19, **dadurch gekennzeichnet, dass** der Ultraschallsensor (4) als Sender oder Empfänger auch über den instrumentierten Körper oder die Atmosphäre auf Signale reagiert.
